# EUROPEAN PATENT APPLICATION

(11) **EP 2 717 113 A1**
(43) Date of publication of application: **09.04.2014**
(21) Application number: 12793595.5
(22) Date of filing: 01.06.2012
(51) Int. Cl.: G05G 5/03, B60K 26/04, G05G 1/30

(54) **SYSTEM FOR REGULATING PRESSURE USED TO DEPRESS RAILCAR ACCELERATOR PEDAL**

(30) Priority: 02.06.2011 JP 2011124563
(71) Applicant: Jiro Collection Ltd., Utsunomiya-shi, Tochigi 320-0051 (JP)
(72) Inventor: SATO Jiro, Utsunomiya-shi Tochigi 320-0851 (JP)
(74) Representative: Hague, Alison Jane
(86) International application number: PCT/JP2012/064298
(87) International publication number: WO 2012/165622

(57) **Abstract**

[Objective]

To provide a system making it possible to automatically or manually change/regulate the accelerator pedal pressure of a vehicle according to driver information and/or vehicle driving conditions.

[Solution means]

A vehicle accelerator pedal pressure regulating system, comprising a pressure regulating switch, a weight measuring means measuring the weight of the driver, a pressure calculation means determining an accelerator pedal pressure value so that the pressure is increased as the weight measured by the weight measuring means is heavier, a switch changeover means changing the pressure regulating switch according to the pressure value determined by the pressure calculation means, and a pressure control means controlling the accelerator pedal pressure in conjunction with the pressure regulating switch, wherein the pressure regulating switch is automatically operated in accordance with the weight of the driver to control the accelerator pedal pressure for the lower or for the higher. In possible modes, the vehicle speed and/or external driving conditions of the vehicle are measured/detected and the pressure value is corrected based on the information.

## Description

### [Scope of the invention]

The present invention relates to a system for regulating the accelerator pedal pressure of a vehicle, and particularly to a vehicle accelerator pedal pressure regulating system for automatically or manually changing/regulating the accelerator pedal pressure of a vehicle according to driver information and/or vehicle driving conditions.

### [Prior art technology]

The pressure on the pedals of a vehicle is determined by the manufacturer and/or vehicle model on an arbitrary basis, ranging wide from low to high. In the case of the accelerator pedal, some vehicles have an accelerator pedal with a significantly low pressure, which can be pressed down easily with a very low pressure. On the other hand, some vehicles have an accelerator pedal with a significantly high pressure, which cannot be pressed down without a large pushing force. The driver has to adjust himself to the pressure varying from vehicle to vehicle. In other words, the driver can do nothing but get accustomed to or adjust himself to the pedal pressure of the vehicle he drives.

For example, continuously pressing down an accelerator pedal with a high pressure for a long time while driving causes the driver to be exhausted more. In addition, the driver repeatedly presses down/releases the accelerator pedal all the time while driving. Then, unsuitable pressure is a great burden on the driver's body. Furthermore, the kind, shape, weight, and sole thickness of the shoes the driver wears while driving cause the driver to feel that the pedal pressure is different. Physical fatigue causes the driver to be less concentrated. Presumably, the pedal pressure plays an important role in reducing the physical burden while driving.

Moreover, there is a so-called cruise control function, which is the function used in highway driving or the like for driving at a constant speed without pressing the accelerator pedal. Using this function, the foot is removed from the accelerator pedal, relaxing the entire body from the toes to the hip. This function is extensively used as being useful for reducing physical fatigue. This is proof of the fact that the driver is forced to bear a physical burden by continuously moving the ankle in the same posture for operating the pedal. Therefore, the pedal pressure is a very important element for reducing the driver's physical fatigue.

When a driver drives a vehicle that is not the one he usually drives, the pedal pressure varying from vehicle to vehicle is a problem. In other words, it takes awhile for a driver who is accustomed to the pedal pressure of the vehicle he usually drives to become accustomed to the pedal pressure of another vehicle. It is difficult to apply the best pressure from the beginning. The driver usually presses down the pedal as he does in the vehicle he usually drives. In such a case, the driver presses down the pedal excessively or fails to press down as he wishes and overstrains himself, which not only hinders smooth driving but also causes sudden starting or sudden braking. This may further cause an accident. Furthermore, the fact that the driver has to adjust himself to the pedal pressure of another vehicle that is different from the pedal pressure of the vehicle he is accustomed to driving means that the driver is forced to do an unaccustomed way of driving, which may cause the driver to be exhausted more.

Furthermore, the vehicle pedal pressure may become a problem depending on the figure and weight of drivers. For example, it is not reasonable for a female of 45 kg in weight and 150 cm in height and a male of 100 kg in weight and nearly 200 cm in height to operate a vehicle pedal of the same pressure.

As described above, in the course of examining various problems, it is thought that making the vehicle pedal pressure adjustable is useful for solving the above problem.

[Patent Document 1] Japanese Unexamined Patent Application No H9-51603.

### [Disclosure of the Invention]

### [Problems overcome by the invention]

With the view of the above problem, the objective of the present invention is to provide a vehicle accelerator pedal pressure regulating system that makes it possible to automatically or manually change/regulate the accelerator pedal pressure of a vehicle according to driver information and/or vehicle driving conditions.

### [Problem solution means]

In order to achieve the above objective, the present invention set forth in Claim 1 is a vehicle accelerator pedal pressure regulating system, comprising a pressure regulating switch, a weight measuring means measuring the weight of the driver, a pressure calculation means determining the accelerator pedal pressure value so that the pressure is increased as the weight measured by the weight measuring means is heavier, a switch changeover means changing the pressure regulating switch according to the pressure value determined by the pressure calculation means, and a pressure control means controlling the accelerator pedal pressure in conjunction with the pressure regulating switch, wherein the pressure regulating switch is automatically operated in accordance with the weight of the driver to control the accelerator pedal pressure for the lower or for the higher.

Furthermore, according to the present invention set forth in Claim 2, said pressure calculation means sets the pressure value to a fixed value when the weight measured by said weight measuring means exceeds a given weight.

Furthermore, according to the present invention set forth in Claim 3, said pressure regulating switch is manually operable.

Furthermore, according to the present invention set forth in Claim 4, said vehicle accelerator pedal pressure regulating system comprises a vehicle speed detection means detecting the vehicle speed, wherein said pressure calculation means corrects the accelerator pedal pressure value based on information of the vehicle speed detected by the vehicle speed detection means.

Furthermore, according to the present invention set forth in Claim 5, said vehicle accelerator pedal pressure regulating system comprises an external conditions detection means detecting external driving conditions of the vehicle, wherein said pressure calculation means corrects the accelerator pedal pressure value based on information of the driving conditions detected by the external conditions detection means.

The vehicle accelerator pedal pressure regulating system according to the present invention makes it possible to automatically or manually change/regulate the accelerator pedal pressure of a vehicle according to driver information and/or vehicle driving conditions, whereby it is useful for reducing the driver's fatigue from driving, preventing the driver from becoming less concentrated, and further preventing accidents due to the accelerator pedal excessively pressed down.

### [Brief explanation of the drawings]

[Fig. 1] A block diagram showing Embodiment 1 of the vehicle accelerator pedal pressure regulating system according to the present invention (Embodiment 1);
[Fig. 2] A flowchart showing the operation process of the vehicle accelerator pedal pressure regulating system according to Embodiment 1 (Embodiment 1);
[Fig. 3] A graphical representation showing the relationship between the weight and pedal pressure (Embodiment 1);
[Fig. 4] A block diagram showing Embodiment 2 of the vehicle accelerator pedal pressure regulating system according to the present invention (Embodiment 2);
[Fig. 5] A flowchart showing the operation process of the vehicle accelerator pedal pressure regulating system according to Embodiment 2 (Embodiment 2);
[Fig. 6] A graphical representation showing the relationship between the vehicle speed and pedal pressure (Embodiment 2);
[Fig. 7] A block diagram showing Embodiment 3 of the vehicle accelerator pedal pressure regulating system according to the present invention (Embodiment 3);
[Fig. 8] A flowchart showing the operation process of the vehicle accelerator pedal pressure regulating system according to Embodiment 3 (Embodiment 3);
[Fig. 9] A graphical representation showing the relationship between an external condition and the pedal pressure (Embodiment 3);
[Fig. 10] A graphical representation showing the relationship between an external condition and the pedal pressure (Embodiment 3);
[Fig. 11] A block diagram showing Embodiment 4 of the vehicle accelerator pedal pressure regulating system according to the present invention (Embodiment 4); and
[Fig. 12] A flowchart showing the operation process of the vehicle accelerator pedal pressure regulating system according to Embodiment 4 (Embodiment 4).

### [Best modes for implementing the invention]

The most prominent characteristic of the vehicle accelerator pedal pressure regulating system according to the present invention makes it possible to automatically or manually change/regulate the accelerator pedal pressure of a vehicle according to driver information (weight) and additionally to vehicle driving conditions such as the vehicle speed and road surface conditions. Embodiments of the vehicle accelerator pedal pressure regulating system according to the present invention will be described hereafter with reference to the drawings.

The present invention is not particularly restricted to the structures shown in the following embodiments, and can be modified on an arbitrary basis without departing from the gist of the technical idea of the present invention.

### [Embodiment 1]

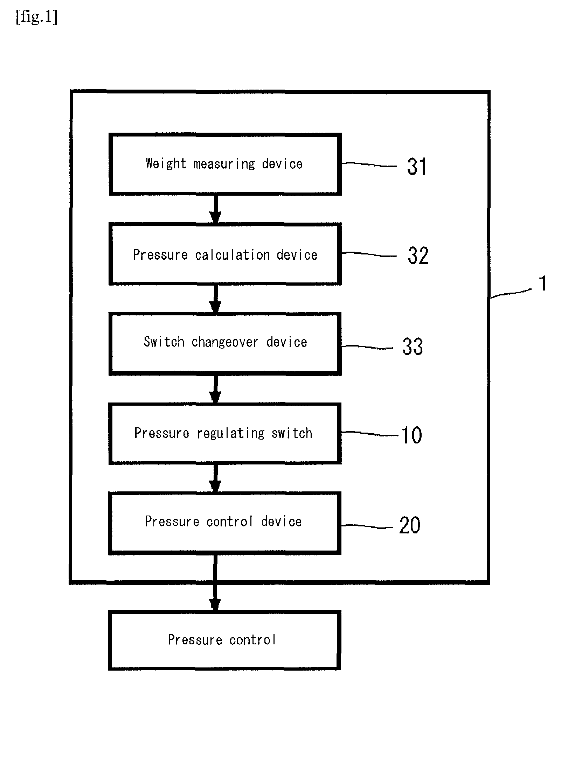

Fig. 1 is a block diagram showing Embodiment 1 that forms the basis of a vehicle accelerator pedal pressure regulating system 1 according to the present invention.

A vehicle accelerator pedal pressure regulating system 1 according to this embodiment comprises a pressure regulating switch 10, a weight measuring device (weight measuring means) 31, a pressure calculation device (pressure calculating means) 32, a switch changeover device (switch changeover means) 33, and a pressure control device (pressure control means) 20.

The pressure regulating switch 10 is an operation switch for activating/controlling the pressure control device 20 described later. The pressure regulating switch 10 consists of a button structure or dial structure. As the pressure regulating switch 10 is automatically changed by the switch changeover device 33 described later, the pressure regulating switch 10 serves as an operation switch for changing the accelerator pedal pressure in a stepwise manner for the lower or for the higher. The number of steps to which the pressure regulating switch 10 is changed is not particularly restricted. For example, a three-step or four-step change mode or nonstep change mode can be contemplated.

The weight measuring device 31 measures the weight of the driver. This weight measuring device is installed in the seat for the driver and measures the weight of the driver sitting therein.

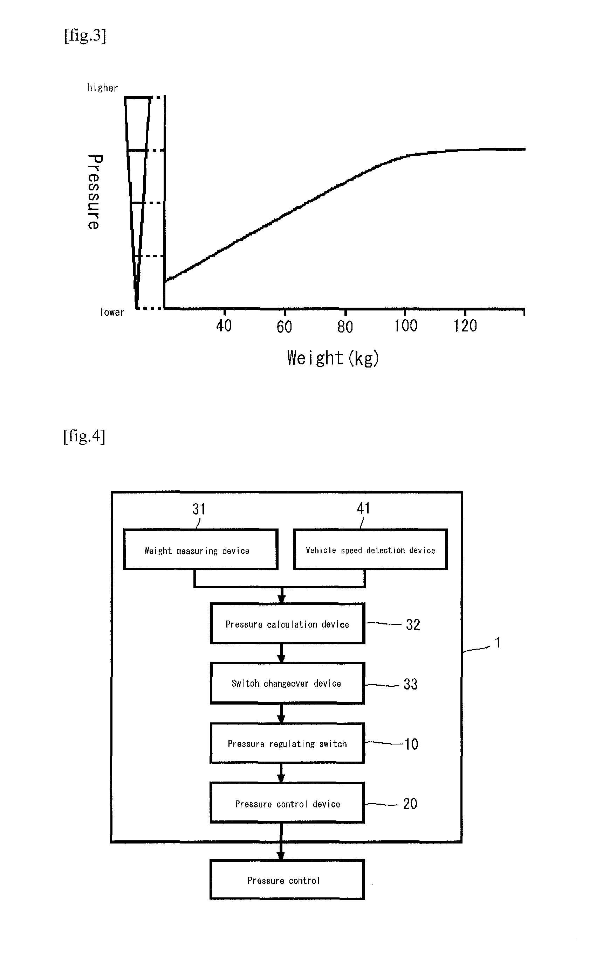

The pressure calculation device 32 determines an accelerator pedal pressure value based on the driver's weight measured by the weight measuring device 31. Here, the calculation to determine the accelerator pedal pressure value is executed as shown in Fig. 3 according to the program written on a ROM or the like in advance.

In regard to the calculation of the accelerator pedal pressure value, more specifically, as shown in Fig. 3, the accelerator pedal pressure value is determined so that the pressure is increased as the weight measured by the weight measuring device 31 is heavier.

Here, it is desirable that as shown in Fig. 3, the pressure value is set to a fixed value when the weight measured by the weight measuring device 31 exceeds a given weight so that the accelerator pedal pressure value is not infinitely increased.

The switch changeover device 33 automatically changes the pressure regulating switch 10 according to the pressure value obtained by the pressure calculation device 32.

The pressure control device 20 serves as the control part for changing the accelerator pedal pressure for the lower or for the higher in conjunction with the operation of the pressure regulating switch 10. The accelerator pedal operation of ordinary vehicles utilizes a hydraulic or electric signals-based transmission mechanism. Pressing down the accelerator pedal leads to various controls on the vehicle via the hydraulic or electric signals-based transmission mechanism. The pressure control device 20 adjusts the hydraulic pressure or electric signals in conjunction with the operation of the pressure regulating switch 10.

In a possible mode of the vehicle accelerator pedal pressure regulating system 1, after the vehicle is started, a pressure operation changeover switch provided in the vehicle is turned on to make the pressure regulating switch 10 automatically operable so that the pedal pressure can be regulated from the regular pressure. In another possible mode, regardless of the pressure operation changeover switch, the pressure regulating switch 10 is made automatically operable at the same time as the vehicle is started so that the accelerator pedal pressure can be regulated from the regular pressure.

An exemplary operation of the above-described vehicle accelerator pedal pressure regulating system 1 will be described hereafter with reference to the drawings.

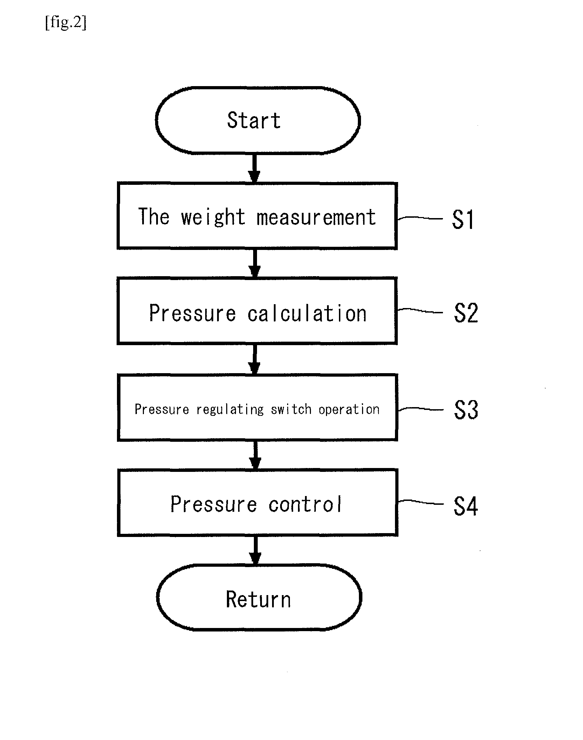

Fig. 2 is a flowchart showing the operation process of the vehicle accelerator pedal pressure regulating system 1 according to Embodiment 1.

This vehicle accelerator pedal pressure regulating system 1 starts when the pressure operation changeover switch provided in the vehicle is turned on after the vehicle is started, or at the same time as the vehicle is started.

After the start, the weight measuring device 31 measures the weight of the driver sitting in the driver seat (Step S1).

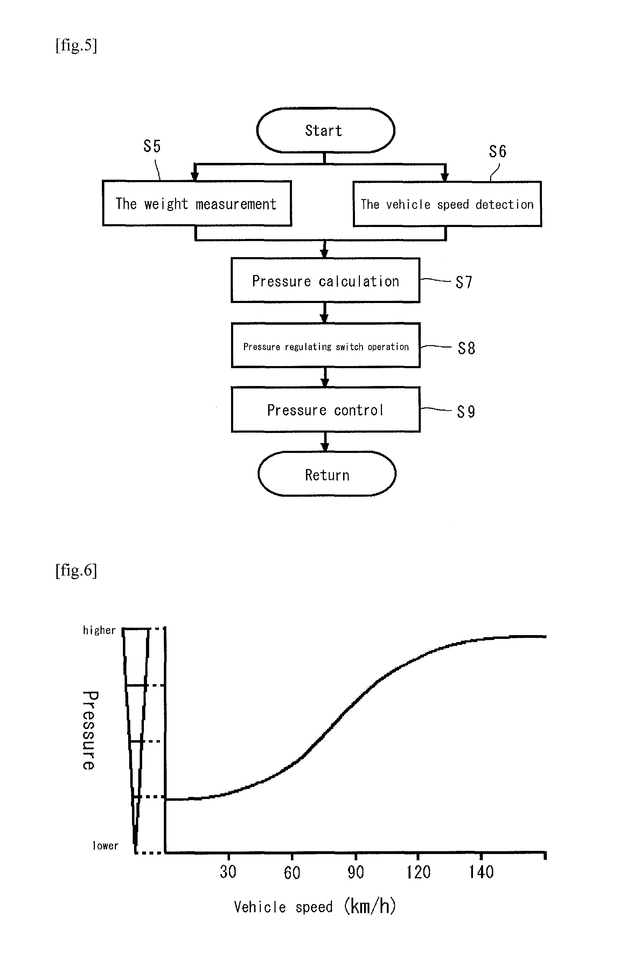

Then, information of the driver's weight measured by the weight measuring device 31 is sent to the pressure calculation device 32 and the pressure calculation device 32 determines an accelerator pedal pressure value based on the weight information by the calculation method shown in Fig. 5 (Step S2).

Then, the switch changeover device 33 automatically operates the pressure regulating switch 10 according to the pressure value obtained by the pressure calculation device 32 (Step S3).

Then, according to the automatically operated pressure regulating switch 10, the pressure control device 20 is activated to control the accelerator pedal pressure (Step S4).

The above-described process in the Steps S1 to S4 is continuously executed until the vehicle accelerator pedal pressure regulating system 1 stops, in other words until the pressure operation changeover switch is turned off or the vehicle engine is stopped.

Here, in a possible mode of the vehicle accelerator pedal pressure regulating system 1 according to the present invention, the pressure regulating switch 10 is manually changeable in addition to the pressure regulating switch 10 being automatically changed by the switch changeover device 33.

By the way, in a possible mode of the present invention, a driver information storage device (driver information storage means) storing the accelerator pedal pressure suitable for the driver is provided.

A storage device already used by the vehicle for storing individual driver seat position information, mirror position information, steering wheel position information, and the like can satisfactorily be used as the driver information storage device. A driver specifying switch is provided and a switch changeover device (switch changeover means) changing the pressure regulating switch 10 in conjunction with the driver specifying switch is provided.

The driver specifying switch is used for storing the accelerator pedal pressure the driver prefers or for calling for a stored accelerator pedal pressure value, and comprises one or multiple switch parts for each driver. Then, with the pressure regulating switch 10 being automatically or manually set to the preferred pressure, a given switch part is pressed and held for a while like the prior art operation of storing seat position information so as to store the accelerator pedal pressure the driver prefers.

The switch changeover device automatically changes the pressure regulating switch 10 according to the pressure value called for by the driver specifying switch.

Provision of the driver information storage device makes it possible to set the pressure to the one preferred by the driver and stored in advance from the beginning of the driving. Then, the operation of changing the pressure regulating switch 10 to the preferred pressure at each time can be shortened.

### [Embodiment 2]

Fig. 4 is a block diagram showing Embodiment 2 of the vehicle accelerator pedal pressure regulating system 1 according to the present invention.

The vehicle accelerator pedal pressure regulating system 1 according to this embodiment comprises a vehicle speed detection device (vehicle speed detection means) 41 in addition to the above-described Embodiment 1.

The vehicle speed detection device 41 is used to detect the vehicle speed of the driven vehicle. The vehicle speed detection device 41 comprises a vehicle speed detection sensor, and detects the induced current generated in accordance with the rotation of a pulse generator attached to the mission, detecting the vehicle speed via a given waveform correction circuit.

The vehicle accelerator pedal pressure regulating system 1 according to this embodiment determines the accelerator pedal pressure value based on the driver's weight measured by the weight measuring device 31 and the vehicle speed detected by the vehicle speed detection device 41.

Here, the calculation to determine the accelerator pedal pressure value employs, for example, the pressure value calculated based on the weight according to the program shown in Fig. 3 as the basic value and corrects the basic value based on the vehicle speed according to the program shown in Fig. 6.

In comparison to the pressure value calculated based on the driver's weight or the basic value, the correction with the vehicle speed, for example, makes the accelerator pedal pressure higher when the vehicle speed is faster than a given value, and makes the accelerator pedal pressure lower when the vehicle speed is slower than a given value. Such correction is conducted according to the program written on a ROM or the like in advance.

An exemplary operation of the above-described vehicle accelerator pedal pressure regulating system 1 will be described hereafter with reference to the drawings.

Fig. 5 is a flowchart showing the operation process of the vehicle accelerator pedal pressure regulating system 1 according to Embodiment 2.

This vehicle accelerator pedal pressure regulating system 1 starts when the pressure operation changeover switch provided in the vehicle is turned on after the vehicle is started, or at the same time as the vehicle is started as in the above-described Embodiment 1.

After the start, the weight measuring device 31 measures the weight of the driver sitting in the driver seat (Step S5) and the vehicle speed detection device 41 detects the vehicle speed of the driven vehicle (Step S6).

Then, information of the driver's weight measured by the weight measuring device 31 and information of the vehicle speed detected by the vehicle speed detection device 41 are sent to the pressure calculation device 32. Then, the pressure calculation device 32 calculates an accelerator pedal pressure value based on the weight information in the same process as in the above-described Embodiment 1, and then corrects the calculated pressure value based on the vehicle speed to determine the final pressure value (Step S7).

Then, the switch changeover device 33 automatically operates the pressure regulating switch 10 according to the corrected pressure value obtained by the pressure calculation device 32 (Step S8).

Then, according to the automatically operated pressure regulating switch 10, the pressure control device 20 is activated to control the accelerator pedal pressure (Step S9).

The above-described process in the Steps S5 to S9 is continuously executed until the vehicle accelerator pedal pressure regulating system 1 stops, in other words until the pressure operation changeover switch is turned off or the vehicle engine is stopped.

### [Embodiment 3]

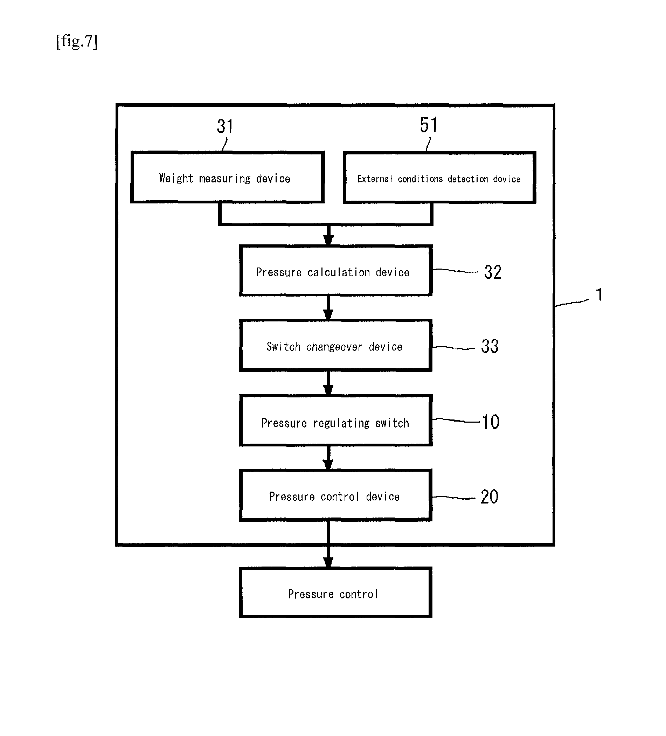

Fig. 7 is a block diagram showing Embodiment 3 of the vehicle accelerator pedal pressure regulating system 1 according to the present invention.

The vehicle accelerator pedal pressure regulating system 1 according to this embodiment comprises an external conditions detection device (external conditions detection means) 51 in addition to the above-described Embodiment 1.

The external conditions detection device 51 is used to detect external driving conditions of the vehicle. More specifically, the external conditions detection device 51 detects various external conditions affecting the accelerator pedal pressing force including road surface conditions such as whether the driving surface is wet or dry, and driving on a sloping road.

The vehicle accelerator pedal pressure regulating system 1 according to this embodiment determines the accelerator pedal pressure value based on the driver's weight measured by the weight measuring device 31 and information of the driving conditions detected by the external conditions detection device 51.

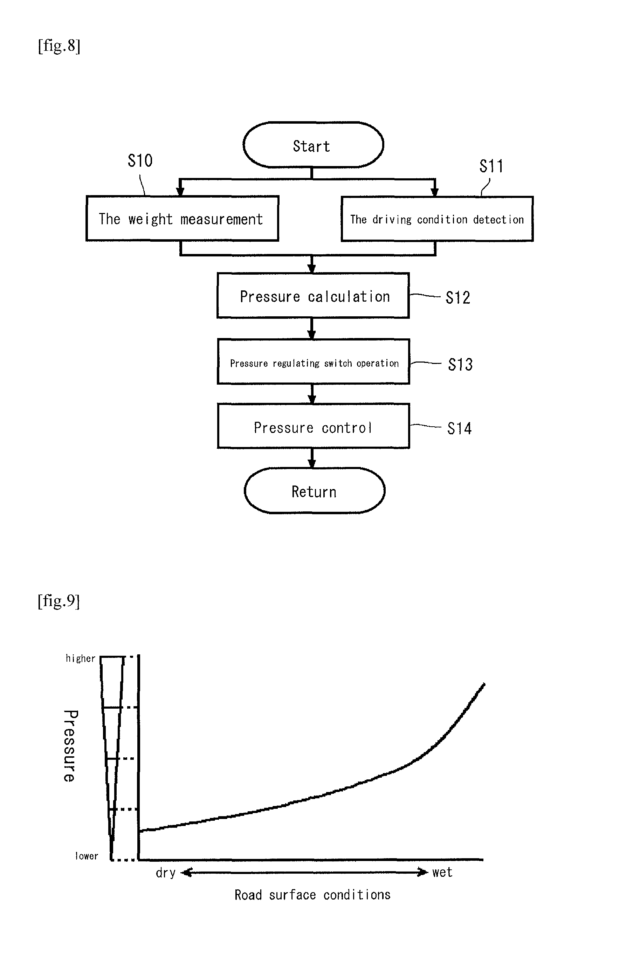

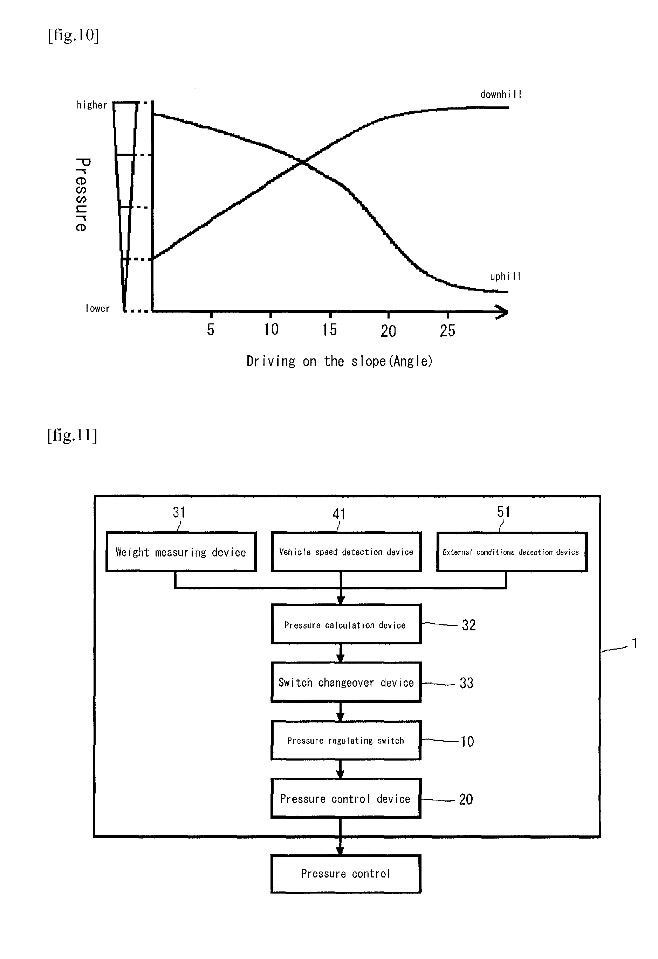

Here, the calculation to determine the accelerator pedal pressure value employs, for example, the pressure value calculated based on the weight according to the program shown in Fig. 3 as the basic value and corrects the basic value based on the driving conditions information according to the programs shown in Figs. 9 and 10.

In comparison to the pressure value calculated based on the driver's weight or the basic value, the correction with the driving conditions, for example, makes the accelerator pedal pressure lower while driving on an uphill, and makes the accelerator pedal pressure higher while driving on a downhill. Such correction is conducted according to the program written on a ROM or the like in advance.

An exemplary operation of the above-described vehicle accelerator pedal pressure regulating system 1 will be described hereafter with reference to the drawings.

Fig. 8 is a flowchart showing the operation process of the vehicle accelerator pedal pressure regulating system 1 according to Embodiment 3.

This vehicle accelerator pedal pressure regulating system 1 starts when the pressure operation changeover switch provided in the vehicle is turned on after the vehicle is started, or at the same time as the vehicle is started as in the above-described Embodiment 1.

After the start, the weight measuring device 31 measures the weight of the driver sitting in the driver seat (Step S10) and the external conditions detection device 51 detects the external driving conditions of the vehicle (Step S11).

Then, information of the driver's weight measured by the weight measuring device 31 and information of the driving conditions detected by the external conditions detection device 51 are sent to the pressure calculation device 32. Then, the pressure calculation device 32 calculates an accelerator pedal pressure value based on the weight information in the same process as in the above-described Embodiment 1, and then corrects the calculated pressure value based on the driving conditions to determine the final pressure value (Step S12).

Then, the switch changeover device 33 automatically operates the pressure regulating switch 10 according to the corrected pressure value obtained by the pressure calculation device 32 (Step S13).

Then, according to the automatically operated pressure regulating switch 10, the pressure control device 20 is activated to control the accelerator pedal pressure (Step S 14).

The above-described process in the Steps S 10 to S 14 is continuously executed until the vehicle accelerator pedal pressure regulating system 1 stops, in other words until the pressure operation changeover switch is turned off or the vehicle engine is stopped.

### [Embodiment 4]

Fig. 11 is a block diagram showing Embodiment 4 of the vehicle accelerator pedal pressure regulating system 1 according to the present invention.

The vehicle accelerator pedal pressure regulating system 1 according to this embodiment has a structure combining the above-described Embodiments 2 and 3. In other words, the vehicle accelerator pedal pressure regulating system 1 according to this embodiment comprises the weight measuring device 31, vehicle speed detection device 41, and external conditions detection device 51, and comprises the pressure calculation device 32 and switch changeover device 33.

The vehicle accelerator pedal pressure regulating system 1 according to this embodiment determines the accelerator pedal pressure value based on the driver's weight measured by the weight measuring device 31, vehicle speed detected by the vehicle speed detection device 41, and driving conditions detected by the external conditions detection device 51.

Here, the calculation to determine the accelerator pedal pressure value employs, for example, the pressure value calculated based on the weight according to the program shown in Fig. 3 as the basic value and corrects the basic value based on the vehicle speed and driving conditions according to the program shown in Fig. 6 and the programs shown in Figs. 9 and 10.

In comparison to the pressure value calculated based on the driver's weight or the basic value, the correction with other conditions, for example, makes the accelerator pedal pressure higher when the vehicle speed is faster than a given value, and makes the accelerator pedal pressure lower when the vehicle speed is slower than a given value. Furthermore, the correction makes the accelerator pedal pressure lower while driving on an uphill, and makes the accelerator pedal pressure higher while driving on a downhill. Such correction is conducted according to the program written on a ROM or the like in advance.

An exemplary operation of the above-described vehicle accelerator pedal pressure regulating system 1 will be described hereafter with reference to the drawings.

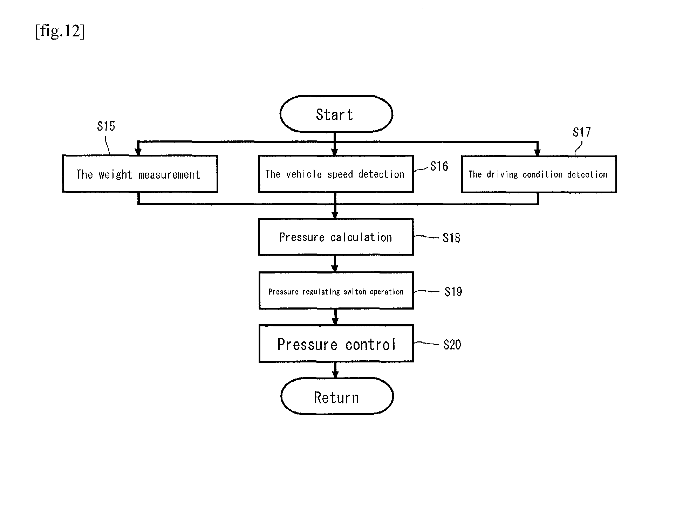

Fig. 12 is a flowchart showing the operation process of the vehicle accelerator pedal pressure regulating system 1 according to Embodiment 4.

This vehicle accelerator pedal pressure regulating system 1 starts when the pressure operation changeover switch provided in the vehicle is turned on after the vehicle is started, or at the same time as the vehicle is started as in the above-described embodiments.

After the start, the weight measuring device 31 measures the weight of the driver sitting in the driver seat (Step S15), the vehicle speed detection device 41 detects the vehicle speed of the driven vehicle (Step S 16), and the external conditions detection device 51 detects the external driving conditions of the vehicle (Step S 17).

Then, information of the driver's weight measured by the weight measuring device 31, information of the vehicle speed detected by the vehicle speed detection device 41, and information of the driving conditions detected by the external conditions detection device 51 are sent to the pressure calculation device 32. Then, the pressure calculation device 32 calculates an accelerator pedal pressure value based on the weight information in the same process as in the above-described Embodiment 1, and then corrects the calculated pressure value based on the vehicle speed and driving conditions to determine the final pressure value (Step S 18).

Then, the switch changeover device 33 automatically operates the pressure regulating switch 10 according to the corrected pressure value obtained by the pressure calculation device 32 (Step S 19).

Then, according to the automatically operated pressure regulating switch 10, the pressure control device 20 is activated to control the pedal pressure (Step S20).

The above-described process in the Steps S15 to S20 is continuously executed until the vehicle accelerator pedal pressure regulating system 1 stops, in other words until the pressure operation changeover switch is turned off or the vehicle engine is stopped.

### [Industrial Applicability]

The vehicle accelerator pedal pressure regulating system 1 according to the present invention makes it possible to automatically or manually change/regulate the accelerator pedal pressure of a vehicle according to driver information such as the driver's preference and weight and/or vehicle driving conditions such as the vehicle speed and road surface conditions, whereby it is useful for reducing the driver's fatigue from driving, preventing the driver from becoming less concentrated, and further preventing accidents due to the accelerator pedal excessively pressed down. Therefore, the present invention has great industrial applicability.

### [Legend]

- 1: Vehicle accelerator pedal pressure regulating system
- 10: Pressure regulating switch
- 20: Pressure control device (pressure control means)
- 31: Weight measuring device (weight measuring means)
- 32: Pressure calculation device (pressure calculation means)
- 33: Switch changeover device (switch changeover means)
- 41: Vehicle speed detection device (vehicle speed detection means)
- 51: External conditions detection device (external conditions detection means)

## Claims

1. A vehicle accelerator pedal pressure regulating system, comprising:
a pressure regulating switch, a weight measuring means measuring the weight of the driver, a pressure calculation means determining an accelerator pedal pressure value so that the pressure is increased as the weight measured by the weight measuring means is heavier, a switch changeover means changing the pressure regulating switch according to the pressure value determined by the pressure calculation means, and a pressure control means controlling the accelerator pedal pressure in conjunction with the pressure regulating switch,
wherein the pressure regulating switch is automatically operated in accordance with the weight of the driver to control the pedal pressure for the lower or for the higher.

2. The vehicle accelerator pedal pressure regulating system according to Claim 1, wherein said pressure calculation means sets said pressure value to a fixed value when the weight measured by said weight measuring means exceeds a given weight.

3. The vehicle accelerator pedal pressure regulating system according to Claim 1 or 2, wherein said pressure regulating switch is manually operable.

4. The vehicle accelerator pedal pressure regulating system according to any one of Claims 1 to 3, wherein said vehicle accelerator pedal pressure regulating system comprises a vehicle speed detection means detecting the vehicle speed, wherein said pressure calculation means corrects the accelerator pedal pressure value based on information of the vehicle speed detected by the vehicle speed detection means.

5. The vehicle accelerator pedal pressure regulating system according to any one of Claims 1 to 4, wherein said vehicle accelerator pedal pressure regulating system comprises an external conditions detection means detecting external driving conditions of the vehicle, wherein said pressure calculation means corrects the accelerator pedal pressure value based on information of the driving conditions detected by the external conditions detection means.
